# EUROPÄISCHE PATENTSCHRIFT

(11) **EP 3 474 239 B1**
(45) Veröffentlichungstag und Bekanntmachung des Hinweises auf die Patenterteilung: **05.08.2026**
(21) Anmeldenummer: 18201424.1
(22) Anmeldetag: 19.10.2018
(51) Int. Cl.: G07C 9/00, B60R 25/24

(54) **VERFAHREN UND SYSTEM ZUR AKTIVIERUNG EINER SICHERHEITSFUNKTION**
METHOD AND SYSTEM FOR ACTIVATION OF A SAFETY FUNCTION
PROCÉDÉ ET SYSTÈME D'ACTIVATION D'UNE FONCTION DE SÉCURITÉ

(30) Priorität: 19.10.2017 DE 102017124380
(43) Veröffentlichungstag der Anmeldung: 24.04.2019
(73) Patentinhaber: HUF Hülsbeck & Fürst GmbH & Co. KG, 42551 Velbert (DE)
(72) Erfinder: SCHINDLER, Mirko, 42549 Velbert (DE); NEUHOFF, Stefan, 45329 Essen (DE); STEEGMANN, Dennis, 42555 Velbert (DE)
(74) Vertreter: Bals, Rüdiger

(56) Entgegenhaltungen:
- WO-A1-2012/069544
- DE-A1- 102012 024 872
- JP-A- 2015 036 257
- US-A1- 2015 180 834
- US-A1- 2015 348 341
- KAI SAN CHOI ET AL: "Automatic source camera identification using the intrinsic lens radial distortion", OPTICS EXPRESS, vol. 14, no. 24, 1 January 2006 (2006-01-01), US, pages 11551, XP055566375, ISSN: 2161-2072, DOI: 10.1364/OE.14.011551

## Beschreibung

Die vorliegende Erfindung betrifft ein Verfahren zur Aktivierung einer Sicherheitsfunktion bei einem Sicherheitssystem, insbesondere eines Fahrzeuges. Ferner bezieht sich die Erfindung auf ein System sowie ein Computerprogrammprodukt zur Aktivierung der Sicherheitsfunktion.

Es ist aus dem Stand der Technik bekannt, dass Authentifizierungsmittel, wie Identifikationsgeber (ID-Geber, also elektronische Schlüssel) oder auch Smartphones zur Authentifizierung bei einem Fahrzeug genutzt werden können. Besonders komfortabel ist hierbei die Nutzung von Mobilfunkgeräten, wie dem Smartphone, da ein Benutzer ein solches häufig bei sich trägt und damit auf ein zusätzliches Gerät, wie den ID-Geber, verzichten kann. Dies erhöht ferner auch die Sicherheit, da ein Vergessen des ID-Gebers unwahrscheinlicher wird.

Allerdings ist es technisch sehr aufwendig und komplex, die Authentizität des genutzten Mobilfunkgeräts bei der Authentifizierung festzustellen. Denn eine Übertragung eines durch die Daten und/oder Software des Mobilfunkgeräts bereitgestellten Codes kann bspw. durch eine Kopie der Daten und/oder Software auf ein anderes Gerät nachgebildet werden. Damit ist ein Problem bei herkömmlichen Authentifizierungsverfahren, dass die Nutzung eines unbefugt geklonten Mobilfunkgeräts zur Authentifizierung nicht oder nur mit hohem Aufwand verhindert werden kann. Ein besonderes Problem ist, wenn die Software und die Daten des Mobilfunkgeräts vollständig auf ein weiteres Gerät übertragen werden, da hierbei auch ggf. verschlüsselte Informationen ohne Kenntnis des Schlüssels unbefugt genutzt werden könner

Die US 2015/348341 A1 befasst sich mit der Verwendung eines RF-Fingerabdrucks zur Authentifizierung von Geräten. Die DE 10 2012 024872 A1 offenbart einen Funkschlüssel zum Authentifizieren eines Fahrzeugnutzers. Die JP 2015 036257 A betrifft die Authorisierung eines Nutzergeräts, welches eine physikalisch unklonbare Funktion (PUF) verwendet. Die US 2015/180834 A1 beschäftigt sich damit, das Erstellen von Gerätefingerabdrücken anhand von gerätefesten Eigenarten zu verhindern.

Es ist daher eine Aufgabe der vorliegenden Erfindung, die voranstehend beschriebenen Nachteile zumindest tlw. zu reduzieren. Insbesondere ist es eine Aufgabe der Erfindung, eine verbesserte und/oder vereinfachte Möglichkeit zur Aktivierung einer Sicherheitsfunktion bei einem Sicherheitssystem eines Fahrzeuges, z. B. zur Authentifizierung bei einem Fahrzeug, vorzuschlagen, ggf. bei gleichzeitiger Reduzierung der Kosten.

Die voranstehende Aufgabe wird gelöst durch ein Verfahren mit den Merkmalen des unabhängigen Verfahrensanspruchs, ein System mit den Merkmalen des unabhängigen Systemanspruchs sowie durch ein Computerprogrammprodukt mit den Merkmalen des unabhängigen Computerprogrammproduktanspruchs. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen System sowie dem erfindungsgemäßen Computerprogrammprodukt, und jeweils umgekehrt, sodass bezüglich der Offenbarung zu den einzelnen Erfindungsaspekten stets wechselseitig Bezug genommen wird bzw. werden kann. Aspekte der vorliegenden Beschreibung, welche nicht unter die Ansprüche fallen, gehören nicht zur beanspruchten Erfindung und dienen lediglich zu Illustrationszwecken.

Die Aufgabe wird insbesondere gelöst durch ein Verfahren zur Aktivierung einer Sicherheitsfunktion, bspw. einer Entriegelung eines Schließsystems eines Fahrzeuges, bei einem Sicherheitssystem, insbesondere des Fahrzeuges.

Das Fahrzeug kann z. B. als Kraftfahrzeug und/oder Personenkraftfahrzeug und/oder Lastkraftfahrzeug und/oder Elektrofahrzeug und/oder Hybridfahrzeug ausgebildet sein. Insbesondere ist das Sicherheitssystem als ein passives Zugangssystem (auch Keyless-Go-System) ausgebildet, bei welchem auf eine aktive manuelle Betätigung eines Identifikationsgebers zur Aktivierung der Sicherheitsfunktion verzichtet werden kann. Insbesondere wird dann eine Authentifizierung und/oder Aktivierung der Sicherheitsfunktion bereits durch die Annäherung an das Fahrzeug ausgelöst.

Bei einem erfindungsgemäßen Verfahren werden die in Anspruch 1 definierten Schritte durchgeführt.

Hierbei ist ein Vorteil, dass das tragbare Gerät durch die gerätefeste Eigenart zuverlässig individualisierbar ist. Dies dient bspw. einer sicheren und zuverlässigen Authentifizierung des tragbaren Geräts als Voraussetzung der Aktivierung der Sicherheitsfunktion bei dem Sicherheitssystem. Die gerätefeste Eigenart kann hierbei eine identifizierbare und gerätespezifische Eigenart des tragbaren Geräts sein, welche insbesondere eine nicht kopierbare Eigenart des tragbaren Geräts ist. In anderen Worten kann auch bei einer vollständigen Kopie der Software und/oder der Daten des tragbaren Geräts auf ein weiteres tragbares Gerät (Klongerät) die gerätefeste Eigenart nicht auf das Klongerät übertragen werden. Die gerätefeste Eigenart kann somit hardwarefest sein, und damit untrennbar mit dem tragbaren Gerät verbunden. Das Klongerät weist hingegen eine andere davon abweichende gerätefeste Eigenart auf. In Frage kommen als Eigenart bspw. Geräteanomalien, d. h. herstellungsbedingte Abweichungen von Geräten - auch solchen gleichen Typs - sodass auch Geräte gleichen Typs voneinander verschiedene Eigenarten aufweisen. Damit wird die Sicherheit beim Betrieb des Sicherheitssystems deutlich erhöht, und ein Diebstahl des Authentifizierungsmittels sowie unbefugtes Aktivieren der Sicherheitsfunktion zuverlässig verhindert.

Vorteilhafterweise ist das Korrelationssignal ein Signal, und damit nicht nur eine Information, welche geräteintern verarbeitet wird. Bspw. ist das Korrelationssignal ein extern vom tragbaren Gerät empfangenes Signal, wie ein elektrisches Übertragungssignal und/oder ein Funksignal und/oder ein akustisches Signal (z. B. eine Schallwelle) oder ein optisches Signal und/oder dergleichen. Die Erfassung des Korrelationssignals erfolgt dabei bspw. durch das Fahrzeug oder durch ein (in Bezug auf das tragbare Gerät externes) weiteres Gerät. Um eine weitergehende und anpassungsfähige Verarbeitung des Korrelationssignals zu ermöglichen, kann das weitere Gerät als Datenverarbeitungsanlage, vorzugsweise als Server, ausgeführt sein, welche insbesondere vernetzt (z. B. auch über eine Datenverbindung eines Mobilfunknetzes und/oder über das Internet) mit dem tragbaren Gerät und/oder dem Fahrzeug verbunden sein kann.

Insbesondere kennzeichnet der Ausdruck "Individualisierungskomponente" wenigstens eine Komponente des tragbaren Geräts als ein Mittel zur Individualisierung des spezifischen tragbaren Geräts, vorzugsweise nur dann, wenn die gerätefeste Eigenart des tragbaren Geräts sich auf diese Komponente auswirkt, und somit eine Auswirkung dieser Komponente das tragbare Gerät gegenüber anderen Geräten individualisierbar macht. Bspw. ist diese (wenigstens eine) Komponente als, ggf. unveränderliche, Hardware-Komponente des tragbaren Geräts ausgebildet. Beispiele für solche Komponenten sind der Prozessor, ein Lautsprecher oder ein Akkumulator oder dergleichen, bei welchen sich geräteindividuelle Anomalien (also die Eigenarten) auf den Betrieb dieser Komponenten auswirken. Bspw. können herstellungs- und/oder alterungsbedingte Abweichungen von Lautsprechern (wie hinsichtlich einer Rauschfrequenz) oder Akkumulatoren (wie hinsichtlich der Kapazität), welche jeweils in unterschiedlichen Geräten (ggf. auch gleichen Typs) verbaut sein können, genutzt werden, um die Geräte voneinander zu unterscheiden. Dabei spielt es auch keine Rolle, wenn es sich jeweils um den gleichen Komponententyp (Lautsprechertyp, Akkumulatortyp) handelt, da auch in diesem Fall toleranzbedingt bei der Herstellung und/oder alterungsbedingt Unterschiede entstehen, welche die Eigenart des Geräts bestimmen.

Die Geräteinformation wird im Rahmen der Erfindung aktiv erzeugt, um die Eigenart des Geräts zu identifizieren. So kann eine Komponente des Geräts (erfindungsgemäß ein Lautsprecher) zur Ausgabe eines vordefinierten Schallsignals angesteuert werden, um die Geräteinformation zu erzeugen. Eine Abweichung des vordefinierten Signals zum tatsächlich ausgegebenen Signal kann dann nur durch die gerätefeste Eigenart hervorgerufen werden, und die Abweichung ist dann die Geräteinformation über die gerätefeste Eigenart.

Optional kann das tragbare Gerät als Mobilfunkgerät, insbesondere Smartphone, ausgebildet sein. Bevorzugt dient dabei das tragbare Gerät als Identifikationsgeber (ID-Geber) zur Aktivierung der Sicherheitsfunktion und/oder zur Authentifizierung am Fahrzeug. Dabei kann das Gerät dazu ausgeführt sein, ein Wecksignal vom Fahrzeug zu empfangen, um daraufhin die erfindungsgemäßen Schritte (insbesondere die Schritte a) bis d)) durchzuführen. Auch kann es möglich sein, dass die erfindungsgemäßen Schritte manuell initiiert werden.

Die Authentifizierung kann z. B. durch das Auswerten gemäß Schritt c) dadurch erfolgen, dass ein digitaler Code mit einer (vorgespeicherten) Vorlage verglichen wird. Entscheidend kann hierbei sein, dass das Fahrzeug oder ein weiteres externes Gerät, wie eine Datenverarbeitungsanlage, die Authentifizierung und/oder das Auswerten durchführt, um bspw. eine fehlerhafte Authentifizierung durch ein kompromittiertes tragbares Gerät zu vermeiden. Die Datenverarbeitungsanlage, wie ein oder mehrere Server, fungiert hierbei als eine Art Vermittler zwischen dem Fahrzeug und dem tragbaren Gerät. Es ist denkbar, dass eine Datenverbindung, z. B. zumindest tlw. über ein Mobilfunknetz, zwischen dem tragbaren Gerät und der Datenverarbeitungsanlage und/oder der Datenverarbeitungsanlage und dem Fahrzeug hergestellt ist. Dies ermöglicht es, über die Datenverbindung das Korrelationssignal zu übertragen (z. B. zwischen dem tragbaren Gerät und der Datenverarbeitungsanlage) und/oder das Auswerteergebnis zu übertragen (z. B. zwischen der Datenverarbeitungsanlage und dem Fahrzeug), insbesondere unidirektional. Dabei kann das Fahrzeug das Auswerteergebnis empfangen, um zu entscheiden, ob die Sicherheitsfunktion aktiviert werden soll. Alternativ kann es möglich sein, dass bereits die Datenverarbeitungsanlage diese Entscheidung trifft, und über die Datenverbindung direkt die Sicherheitsfunktion bei dem Fahrzeug aktiviert, z. B. eine Fahrzeugver- und/oder - entriegelung. Hierzu kann bspw. eine App des tragbaren Geräts bereitgestellt werden, um das Fahrzeug durch einen Benutzer mobil zu verriegeln und/oder entriegeln.

Die Erfindung hat den Vorteil, dass auch wenigstens eine Geräteinformation anhand von Merkmalen ermittelt werden können, welche aufgrund der Eigenart des tragbaren Geräts bei einem gleichzeitigen Betrieb von zwei oder mehr Komponenten auftreten. Hierbei können sich z. B. die Individualisierungskomponenten während des Betriebs beeinflussen, sodass aufgrund dieser Beeinflussung wenigstens eine Auswirkung erfassbar, insbesondere messbar, ist. Anhand dieser Auswirkung kann dann die gerätefeste Eigenart besonders zuverlässig identifiziert werden.

Gemäß einem Vorteil ist das Korrelationssignal ein Signal, welches durch eine Ermittlung, insbesondere Messung, einer Auswirkung der Ansteuerung der wenigstens einen Individualisierungskomponente (gemäß Schritt a)) hervorgerufen und/oder beeinflusst und/oder bestimmt wird. Erfindungsgemäß soll die Individualisierungskomponente ein Lautsprecher sein, eine weitere Individualisierungskomponente ein Vibrationsgeber sein (welche gleichzeitig mit dem Lautsprecher angesteuert wird) und die Erfassungskomponente ein Gyrosensor oder ein Mikrofon sein. Die Auswirkung ist dann bspw. eine Auswirkung auf die Erfassung des Gyrosensors oder des Mikrofons. Das Korrelationssignal ist bspw. das durch die Erfassungskomponente erfasste Signal.

Es kann vorgesehen sein, dass ein Auswerteergebnis und/oder ein Korrelationsmerkmal und/oder das Korrelationssignal und/oder wenigstens eine Geräteinformation dazu genutzt wird, einen (vorgegebenen) Code zur Authentifizierung bei dem Sicherheitssystem zu verschlüsseln bzw. zu codieren. Insbesondere kann somit ein Authentifizierungsverfahren, welches entsprechende Codes nutzt, durch die Verschlüsselung anhand der genannten Informationen weiter verbessert werden. Anschließend kann der derart verschlüsselte Code an das Fahrzeug oder ein externes Gerät übertragen werden.

Ferner ist im Rahmen der Erfindung vorgesehen, dass das Ansteuern gemäß Schritt
a) in Abhängigkeit von einer (vorgespeicherten) Vorgabe erfolgt, und bei Schritt c) der nachfolgende Schritt durchgeführt wird:
   - Auswerten des erfassten Korrelationssignals dadurch, dass eine Abweichung des Korrelationssignals zur Vorgabe identifiziert wird, um ein Korrelationsmerkmal des Korrelationssignals zu bestimmen, wobei bevorzugt das Korrelationsmerkmal mit der gerätefesten Eigenart korreliert ist,
   und bei Schritt d) der nachfolgende Schritt durchgeführt wird:
   - Aktivieren der Sicherheitsfunktion in Abhängigkeit von dem Korrelationsmerkmal des Korrelationssignals, z. B. durch eine Auswertevorrichtung und/oder ein Steuergerät des Fahrzeuges.

Bspw. unterscheidet sich das Korrelationssignal, z. B. ein durch ein Mikrofon oder ein Gyrosensor erfasstes Signal, nur geringfügig von einem erwarteten Korrelationssignal. Das erwartete Korrelationssignal ist ein solches, bei welchem keine Eigenart des Geräts vorhanden ist, also ein ideales und ggf. vorhersagbares Signal. Um nun dennoch die geringen Unterschiede zur Identifizierung der gerätefesten Eigenart zu nutzen, kann ein solches Korrelationsmerkmal bestimmt werden. Hierzu können ggf. verschiedene Methoden genutzt werden, wie eine statistische Auswertung und/oder Analyse und/oder Mustererkennung und/oder dergleichen, bspw. bei der Auswertung gemäß Schritt c). Somit wird ein besonders zuverlässiges Verfahren zur Aktivierung der Sicherheitsfunktion bereitgestellt.

Im ahmen der Erfindung ist vorgesehen, dass
- bei Schritt a) ein Lautsprecher des tragbaren Geräts als die Individualisierungskomponente angesteuert wird, um gemäß einer (vorgespeicherten) Vorgabe ein Schallsignal zur Erzeugung der Geräteinformation auszugeben, und
- zumindest tlw. gleichzeitig wenigstens eine weitere Individualisierungskomponente des tragbaren Geräts gemäß der Vorgabe angesteuert wird, nämlich ein Vibrationsgeber, um das Schallsignal in definierter Weise zu beeinflussen, und
- bei Schritt b) das, insbesondere beeinflusste, Schallsignal als das Korrelationssignal erfasst wird, vorzugsweise durch ein Mikrofon des tragbaren Geräts als die Erfassungskomponente, und/oder eine Auswirkung der zumindest tlw. gleichzeitigen Ansteuerung der ersten und der wenigstens einen weiteren Individualisierungskomponente, insbesondere über einen Gyrosensor, erfasst wird, um das Korrelationssignal zu bestimmen,
- bei Schritt c) ein Unterschied des erfassten Korrelationssignals zur Vorgabe ausgewertet wird, um ein Korrelationsmerkmal zu bestimmen, wodurch die gerätefeste Eigenart identifiziert wird.

Bspw. kann das Signal des Gyrosensors oder des Mikrofons direkt durch das Fahrzeug als Korrelationssignal erfasst werden, oder zunächst durch das tragbare Gerät erfasst, ggf. weiterverarbeitet und/oder verschlüsselt und/oder (zwischen-) gespeichert, und dann an das Fahrzeug und/oder ein externes Gerät als Korrelationssignal übermittelt werden. Auch kann es möglich sein, dass ein Zeitstempel bei dem Korrelationssignal und/oder bei der Zwischenspeicherung genutzt wird, um ein unbefugtes Kopieren des Korrelationssignals zu verhindern.

Vorzugsweise kann vorgesehen sein, dass gemäß Schritt b) das Korrelationssignal ausschließlich extern vom (d. h. in Bezug auf das) tragbare(n) Gerät, insbesondere fahrzeugseitig und/oder durch eine Datenverarbeitungsanlage, erfasst wird, und vorzugsweise gemäß Schritt c) das Auswerten ausschließlich extern und/oder fahrzeugseitig durchgeführt wird, vorzugsweise durch eine externe Datenverarbeitungsanlage. Dies ermöglicht eine weitere Verbesserung der Sicherheit, da eine Kompromittierung des tragbaren Geräts nicht die Sicherheit beeinträchtigen kann. Es ist dabei denkbar, dass das Auswerteergebnis von der externen Datenverarbeitungsanlage vernetzt an das Fahrzeug und/oder an eine Auswertevorrichtung und/oder an das tragbare Gerät übertragen wird, um die Sicherheitsfunktion anhand des Auswerteergebnisses zu aktivieren.

Ein weiterer Vorteil im Rahmen der Erfindung ist erzielbar, wenn die gerätefeste Eigenart eine Geräteanomalie des tragbaren Geräts ist, welche vorzugsweise unkopierbar ausgeführt ist. Bei einer solchen Geräteanomalie handelt es sich z. B. um Abweichungen unterschiedlicher Geräte. Auch Geräte gleichen Typs können diese Abweichung untereinander aufweisen und damit anhand der Abweichung unterscheidbar sein. Damit wird die Sicherheit beim Betrieb des Sicherheitssystems deutlich erhöht werden.

Es kann im Rahmen der Erfindung vorgesehen sein, dass das Korrelationssignal anhand wenigstens drei oder wenigstens vier oder wenigstens fünf unterschiedlichen Geräteinformationen unterschiedlicher Individualisierungskomponenten erzeugt wird, vorzugsweise anhand einer Überlagerung von unterschiedlichen Auswirkungen und/oder Signalen der Individualisierungskomponenten. Damit kann sich ggf. die Auswirkung der gerätefesten Eigenart erhöhen, und somit leichter das Korrelationsmerkmal bestimmt werden, um die gerätefeste Eigenart zu identifizieren.

Von weiterem Vorteil kann vorgesehen sein, dass bei Schritt c), insbesondere fahrzeugseitig, ein Korrelationsmerkmal des Korrelationssignals bestimmt wird, und bei Schritt d) nur dann ein Aktivieren der Sicherheitsfunktion erfolgt, wenn das Korrelationsmerkmal positiv authentifiziert wird, bevorzugt durch einen Vergleich mit einer jeweiligen Authentifizierungsvorgabe. Bspw. kann hierzu eine kryptografisch gesicherte Vorgabe gespeichert sein, welche als Authentifizierungsvorgabe genutzt wird, z. B. hinterlegt in einem Datenspeicher des Fahrzeuges. Insbesondere kann der Datenspeicher auch hardwareseitig eine Kryptografie-Funktion aufweisen, z. B. zur Entschlüsselung, und somit als kryptografischer Datenspeicher ausgebildet sein. Dies erhöht die Geschwindigkeit und Sicherheit bei der Authentifizierung.

Des Weiteren kann vorgesehen sein, dass gemäß Schritt b) das Erfassen und/oder gemäß Schritt c) das Auswerten bereits durch das tragbare Gerät durchgeführt wird, vorzugsweise initiiert durch eine Annäherung an das Fahrzeug, und das Korrelationssignal und/oder das Auswerteergebnis zwischengespeichert wird, um es bevorzugt bei Aufforderung durch das Sicherheitssystem an das Sicherheitssystem zu übertragen. Bspw. kann hierzu durch das Sicherheitssystem detektiert werden, wenn das Fahrzeug in einen ersten Überwachungsbereich des Fahrzeuges eintritt (z. B. durch die Übermittlung eines Wecksignals). Diese Detektion kann dann ggf. die Ausführung zumindest von Schritt a) und/oder b) und/oder c) initiieren, sodass ggf. bereits eine Information für das Korrelationssignal oder das Korrelationssignal selbst bereitgestellt, vorzugsweise zwischengespeichert, wird. Alternativ oder zusätzlich kann die Ausführung auch manuell initiiert werden. Anschließend kann beim Eintreten in einen weiteren Überwachungsbereich (z. B. durch eine Annäherungsdetektion eines Annäherungssensors am Türgriff des Fahrzeuges) und/oder durch ein weiteres Ereignis die Übermittlung des Korrelationssignals und/oder der Information und/oder die Authentifizierung initiiert werden, ohne dass die Schritte a) und/oder b) und/oder c) noch zeitaufwendig durchgeführt werden müssen.

Ferner ist es optional vorgesehen, dass bei Schritt c) gemäß einer Gesamtanzahl wenigstens zwei oder wenigstens drei oder wenigstens vier unterschiedliche Korrelationsmerkmale des wenigstens einen Korrelationssignals bestimmt werden, und insbesondere bei Schritt d) nur dann ein Aktivieren der Sicherheitsfunktion erfolgt, wenn auch nur eine Mindestanzahl der Korrelationsmerkmale, z. B. wenigstens eines oder wenigstens zwei oder wenigstens drei der Korrelationsmerkmale, positiv authentifiziert wird, bevorzugt durch einen Vergleich mit einer jeweiligen Authentifizierungsvorgabe, wobei besonders bevorzugt die Mindestanzahl 50% oder 70% oder 80% oder 90% der Gesamtanzahl beträgt. In anderen Worten kann zumindest ein Korrelationsmerkmal mehr als notwendig genutzt werden, um eine Authentifizierung zur Aktivierung der sicherheitsrelevanten Funktion durchzuführen. Somit kann auch bei einer geringfügigen Veränderung des tragbaren Geräts (z. B. einer Beschädigung oder dergleichen), welche sich auf die gerätefeste Eigenart in geringfügiger Weise auswirkt, ggf. dennoch eine Authentifizierung stattfinden. Voraussetzung hierfür ist, dass durch die Veränderung lediglich ein Teil der genutzten Korrelationsmerkmale verändert wird. Um eine weitere Beeinträchtigung zu vermeiden, kann es möglich sein, dass in diesem Fall ein erneuter Anlernprozess initiiert wird, z. B. automatisch und/oder manuell ggf. nach Aufforderung.

Vorteilhaft ist es darüber hinaus, wenn bei Schritt b) wenigstens zwei oder wenigstens drei unterschiedliche Korrelationssignale für unterschiedliche gerätefeste Eigenarten erfasst werden, und entsprechend gemäß Schritt c) jeweils (separat und/oder unabhängig voneinander) ausgewertet werden, wobei vorzugsweise gemäß Schritt d) eine Aktivierung der Sicherheitsfunktion nur dann erfolgt, wenn ein jeweiliges Korrelationsmerkmal einer bestimmten Anzahl, bevorzugt jeder, der Korrelationssignale positiv authentifiziert wird, besonders bevorzugt durch einen Vergleich mit einer jeweiligen Authentifizierungsvorgabe. In anderen Worten können verschiedene Korrelationssignale erzeugt und/oder übermittelt und/oder erfasst werden, was die (Ausfall-) Sicherheit und Zuverlässigkeit und insbesondere auch die Fehlertoleranz deutlich erhöhen kann. Die bestimmte Anzahl entspricht bspw. der Gesamtanzahl der genutzten Korrelationssignale, ggf. um eins oder zwei oder drei reduziert, um so ein Grad der Fehlertoleranz zu bestimmen.

Bspw. kann dabei jedes der Korrelationsmerkmale unabhängig voneinander bestimmt und/oder erzeugt werden, z. B. auf der Grundlage unterschiedlicher Korrelationssignale. Alternativ oder zusätzlich betrifft jedes der Korrelationssignale eine unterschiedliche Auswirkung der (zumindest tlw.) gleichzeitigen Ansteuerung von Individualisierungskomponenten. In anderen Worten kann eine erste zumindest tlw. gleichzeitige Ansteuerung unterschiedlicher Individualisierungskomponenten gemäß Schritt a) und/oder eine Erfassung gemäß Schritt b) zur Erzeugung eines ersten Korrelationsmerkmals erfolgen, eine zweite zumindest tlw. gleichzeitige Ansteuerung unterschiedlicher Individualisierungskomponenten gemäß Schritt a) und/oder Erfassung gemäß Schritt b) zur Erzeugung eines zweiten Korrelationsmerkmals erfolgen, eine dritte zumindest tlw. gleichzeitige Ansteuerung unterschiedlicher Individualisierungskomponenten gemäß Schritt a) und/oder Erfassung gemäß Schritt b) zur Erzeugung eines dritten Korrelationsmerkmals erfolgen, usw. Dabei kann es vorgesehen sein, dass die erste und/oder zweite und/oder dritte Ansteuerung usw. nicht gleichzeitig erfolgt, um die unterschiedlichen Korrelationsmerkmale unabhängig voneinander zu erzeugen.

Es kann ein Initiierungsprozess vorgesehen sein, um eine Vorgabe (Authentifizierungsvorgabe) durch das Fahrzeug und/oder ein externes Gerät zu bestimmen, welche zur Auswertung gemäß Schritt c) und/oder Aktivierung gemäß Schritt d) dient. Bspw. wird das wenigstens eine Korrelationssignal und/oder wenigstens ein Korrelationsmerkmal mit dieser Vorgabe verglichen, um die Authentifizierung des tragbaren Geräts durchzuführen. Insbesondere wird somit durch den Initiierungsprozess als einen vollständigen Anlernprozess die gerätefeste Eigenart angelernt und anhand der Vorgabe identifizierbar. Bspw. kann hierzu wenigstens ein Korrelationsmerkmal und/oder sämtliche für die Authentifizierung genutzten Korrelationsmerkmale bestimmt werden und als Vorlage hinterlegt werden, z. B. verschlüsselt und/oder in einem Datenspeicher des Fahrzeuges.

Ferner kann im Rahmen der Erfindung vorgesehen sein, dass bei Schritt d) nur dann ein Aktivieren der Sicherheitsfunktion erfolgt, wenn
- eine Gesamtanzahl der Korrelationsmerkmale positiv authentifiziert wird, und/oder
- eine Mindestanzahl der Korrelationsmerkmale positiv authentifiziert wird, wobei dann ein Anlernprozess initiiert wird, um die fehlerhaft authentifizierten Korrelationsmerkmale neu am Sicherheitssystem anzulernen.

Bspw. umfasst der Anlernprozess hierbei einen zumindest tlw. Initiierungsprozess, z. B. nur für das fehlerhaft authentifizierte Korrelationsmerkmal.

Des Weiteren ist es denkbar, dass bei erfolgloser Aktivierung gemäß Schritt d) eine Alternativauthentifizierung durchgeführt wird, bevorzugt unabhängig vom tragbaren Gerät, besonders bevorzugt anhand eines biometrischen Merkmals eines Benutzers des Fahrzeuges. Bspw. kann hierzu ein Fingerabdrucksensor des tragbaren Geräts genutzt werden, und vorzugsweise ein Ergebnis einer Erfassung des Fingerabdrucksensors an das Fahrzeug zur Authentifizierung übertragen werden.

Bevorzugt kann im Rahmen der Erfindung vorgesehen sein, dass eine jeweilige Authentifizierungsvorgabe für ein jeweiliges Korrelationsmerkmal durch einen Anlernprozess zur Identifizierung des tragbaren Geräts bestimmt und, bevorzugt ausschließlich, im Fahrzeug gespeichert wird, wobei besonders bevorzugt gemäß Schritt d) bei einer Abweichung wenigstens oder maximal eines der Korrelationsmerkmale von der jeweiligen Authentifizierungsvorgabe eine erneute Identifizierung des tragbaren Geräts angefordert wird, vorzugsweise durch eine Ausgabe eines Hinweises oder einer Fehlermeldung am tragbaren Gerät. Ein solcher Hinweis kann bspw. auf einer Anzeigevorrichtung, wie einem Touchscreen des tragbaren Geräts ausgegeben werden, oder ggf. auch durch eine akustische Fehlermeldung.

Ebenfalls Gegenstand der Erfindung ist ein System zur Aktivierung einer Sicherheitsfunktion bei einem Sicherheitssystem eines Fahrzeuges, gemäß Anspruch 5.

Damit bringt das erfindungsgemäße System die gleichen Vorteile mit sich, wie sie ausführlich mit Bezug auf ein erfindungsgemäßes Verfahren beschrieben worden sind.

Zudem ist das System geeignet, gemäß einem erfindungsgemäßen Verfahren betrieben zu werden.

Insbesondere kann es möglich sein, dass das Korrelationssignal nicht im tragbaren Gerät ermittelt und/oder erfasst und/oder gespeichert wird, sondern ausschließlich außerhalb vom tragbaren Gerät, bspw. im Fahrzeug oder in einem externen Gerät. Dadurch kann verhindert werden, dass bei einem Klonen des tragbaren Geräts eine sicherheitsrelevante Information mitkopiert werden kann.

Die Auswertevorrichtung weist bspw. einen Prozessor und/oder einen Mikrocontroller und/oder dergleichen auf. Es sind unterschiedliche Ausführungen für die Auswertevorrichtung denkbar, bspw. als Fahrzeugelektronik, als Teil eines externen Geräts, wie einer Datenverarbeitungsanlage, oder auch als Teil des tragbaren Geräts.

Bei einer Anordnung der Auswertevorrichtung im tragbaren Gerät, d. h. einer Auswertung (gemäß Schritt c)) durch das tragbare Gerät selbst, müssen ggf. weitere Sicherheitsvorkehrungen getroffen werden, damit ein Kopieren des Auswerteergebnisses nicht dazu führt, dass dieses zur Aktivierung der Sicherheitsfunktion genutzt werden kann. Hierzu ist es ggf. denkbar, dass lediglich eine Zwischenspeicherung des Auswerteergebnisses genutzt wird. So kann das Auswerteergebnis bspw. nur für eine bestimmte Zeitdauer gespeichert werden, was durch einen Zeitstempel durch das (z. B. fahrzeugseitige) Sicherheitssystem geprüft werden kann. Hierzu wird der Zeitstempel und/oder das Auswerteergebnis bspw. kryptografisch gesichert.

Es kann möglich sein, dass die Schritte b) und/oder c) und/oder d) vollständig und/oder ausschließlich außerhalb des tragbaren Geräts durchgeführt werden. Damit kann vermieden werden, dass Daten über das Korrelationsmerkmal oder dergleichen auf dem tragbaren Gerät gespeichert sind.

Es kann vorteilhaft sein, wenn das Aktivieren der Sicherheitsfunktion auch durch eine Auswertevorrichtung in Abhängigkeit von dem Auswerteergebnis erfolgt. In diesem Fall initiiert die Auswertevorrichtung direkt die Aktivierung der Sicherheitsfunktion. Deshalb kann es von Vorteil sein, wenn die Auswertevorrichtung als Fahrzeugelektronik ausgebildet ist, um bspw. direkt ein Schließsystem des Fahrzeuges anzusteuern. Auch ist es denkbar, dass die Aktivierung der Sicherheitsfunktion vernetzt initiiert wird, sodass die Auswertevorrichtung z. B. Teil einer externen Datenverarbeitungsanlage (Server) ist.

Von Vorteil ist es, wenn die Sicherheitsfunktion eine sicherheitsrelevante Funktion des Fahrzeuges ist, wie z. B. die Entriegelung bei einem Schließsystem des Fahrzeuges. So kann die Sicherheitsfunktion z. B. zur Öffnung der Türen des Fahrzeuges dienen. Auch kann es möglich sein, dass die Sicherheitsfunktion das Starten des Motors des Fahrzeuges umfasst.

Dabei ist es besonders vorteilhaft, wenn das Aktivieren der Sicherheitsfunktion eine Authentifizierung voraussetzt und/oder impliziert. Die Authentifizierung dient zur Gewährleistung, dass nur der berechtigte Benutzer die Sicherheitsfunktion aktivieren kann. Hierzu wird bspw. das tragbare Gerät als Authentifizierungsmittel genutzt. In anderen Worten kann derjenige Benutzer, welcher das tragbare Gerät mit sich führt, auch die Sicherheitsfunktion aktivieren.

Um eine noch weitergehende Sicherheit bereitzustellen, also die Authentifizierung nicht nur mit dem tragbaren Gerät sondern auch bspw. mit dem Benutzer direkt zu verknüpfen, können weitere Authentifizierungsmittel vorgesehen sein, und Voraussetzung für die Aktivierung der Sicherheitsfunktion sein. Ein weiteres Authentifizierungsmittel ist bspw. ein Code, welcher durch den Benutzer z. B. am tragbaren Gerät eingegeben werden muss, oder ein biometrisches Merkmal, wie ein Fingerabdruck. Dieses weitere Authentifizierungsmittel kann dann ggf. auch durch das tragbare Gerät oder durch ein weiteres Gerät erfasst werden.

Als weitere verbessernde Maßnahme kann eine Individualisierungskomponente auch derart angesteuert werden, dass die Individualisierungskomponente durch wenigstens ein biometrisches Merkmal eines Benutzers beeinflusst wird. Bspw. wird ein Lagesensor des Geräts durch den Benutzer aufgrund seiner Handhabung des Geräts beeinflusst. Dieses für den Benutzer individuelle Merkmal kann dann ggf. ebenfalls zur Bestimmung eines Korrelationsmerkmals genutzt werden. Möglich ist auch eine Nutzung eines Benutzerverhaltens (ggf. einer statistischen Information) in Bezug auf das tragbare Gerät zur Generierung der Geräteinformation und/oder Beeinflussung der oder einer weiteren Individualisierungskomponente.

Es kann weiter möglich sein, dass das tragbare Gerät als ein tragbares Mobilfunkgerät, insbesondere Smartphone, ausgebildet ist, sodass das tragbare Gerät wenigstens eine Kommunikationsschnittelle zur Mobilfunkkommunikation aufweist. Bspw. kann diese Kommunikationsschnittstelle zur Datenverbindung mit dem Fahrzeug und/oder einem externen Gerät dienen, um z. B. das Korrelationssignal zu übertragen.

Vorzugsweise kann vorgesehen sein, dass wenigstens zwei Komponenten des tragbaren Geräts vorgesehen sind, welche jeweils eine Primärfunktion des tragbaren Geräts bereitstellen, wobei eine erste der Komponenten als eine erste Individualisierungskomponente und wenigstens eine zweite der Komponenten als wenigstens eine zweite Individualisierungskomponente jeweils eine Sendefunktion als Sekundärfunktion aufweisen, um ein erstes und wenigstens ein zweites Signal mit einer jeweiligen Geräteinformation auszusenden. Bspw. dient eine der Individualisierungskomponenten als Lautsprecher primär zur akustischen Ausgabe bei dem tragbaren Gerät und nur sekundär zur Erzeugung der Geräteinformation. Insbesondere kann zur Erzeugung der Geräteinformation gemäß Schritt a) der Lautsprecher auch so angesteuert werden, dass das akustische Signal nicht für den Benutzer hörbar ist. In gleicher Weise kann ggf. auch generell die Ansteuerung gemäß Schritt a) in einer Weise erfolgen, dass dies bzw. die dabei erzeugten Signale für den Benutzer nicht wahrnehmbar sind. Dies erhöht den Komfort beim Betrieb des Systems deutlich.

Ebenfalls Gegenstand der Erfindung ist ein Computerprogrammprodukt für ein tragbares Gerät zur Aktivierung einer Sicherheitsfunktion bei einem Sicherheitssystem eines Fahrzeugs gemäß Anspruch 7.

Damit bringt das erfindungsgemäße Computerprogrammprodukt die gleichen Vorteile mit sich, wie sie ausführlich mit Bezug auf ein erfindungsgemäßes Verfahren und erfindungsgemäßes System beschrieben worden sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Darstellung eines erfindungsgemäßen Systems,
- Figur 2: eine weitere schematische Darstellung eines erfindungsgemäßen Systems,
- Figur 3: eine schematische Darstellung zur Visualisierung eines Verfahrens.

In den nachfolgenden Figuren werden für die gleichen technischen Merkmale auch von unterschiedlichen Ausführungsbeispielen die identischen Bezugszeichen verwendet.

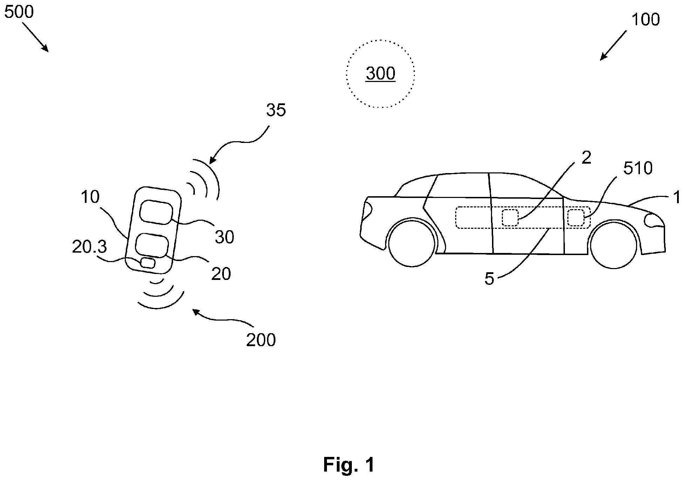

In Figur 1 ist schematisch ein erfindungsgemäßes Verfahren 100 visualisiert sowie ein erfindungsgemäßes System 500 schematisch dargestellt. Es ist ein Fahrzeug 1 gezeigt, welches bspw. ein Schließsystem 2 und/oder ein Sicherheitssystem 5 umfasst. Des Weiteren kann eine Auswertevorrichtung 510 beim Fahrzeug 1, z. B. einer Fahrzeugelektronik, vorgesehen sein.

Des Weiteren kann ein tragbares Gerät 10 zur Authentifizierung beim Fahrzeug 1 und/oder bei einem externen Gerät 300, z. B. einer Datenverarbeitungsanlage 300, genutzt werden.

Vorteilhafterweise ist hierzu eine Kommunikation über eine Kommunikationsschnittstelle 30 des tragbaren Geräts 10 durch die Aussendung eines Kommunikationssignals 35 möglich. Auch ist es denkbar, dass das Kommunikationssignal 35 und/oder die Kommunikationsschnittstelle 30 lediglich unabhängig vom Fahrzeug 1 und/oder vom Sicherheitssystem 5 nur zur Mobilfunkkommunikation eingesetzt wird.

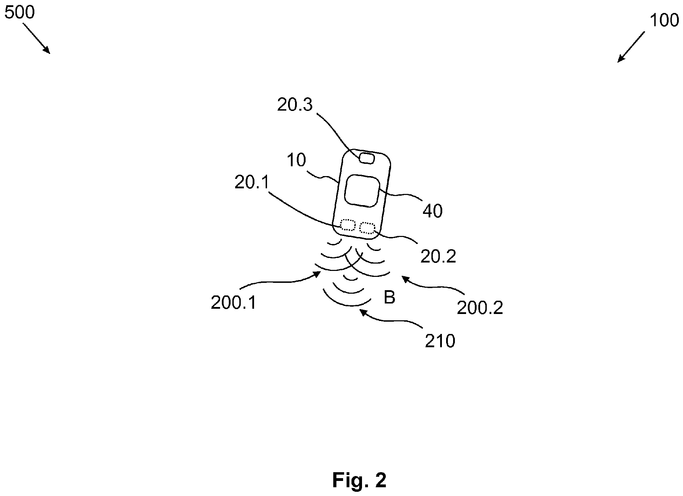

Zur Ermöglichung einer sicheren Authentifizierung kann das tragbare Gerät 10 zumindest eine Komponente 20 aufweisen, welche (jeweils) als Individualisierungskomponente 20 und/oder als Erfassungskomponente 20 gemäß einem erfindungsgemäßen Verfahren 100 genutzt werden kann. So kann bspw. eine erste Individualisierungskomponente 20.1, eine zweite Individualisierungskomponente 20.2 und eine Erfassungskomponente 20.3 beim tragbaren Gerät 10 vorgesehen sein, wie auch in Figur 2 veranschaulicht ist.

In Figur 2 ist ferner dargestellt, dass das tragbare Gerät 10 auch eine Anzeigevorrichtung 40, bspw. einen Touchscreen, aufweisen kann, z. B. zur Ausgabe eines Hinweises an einen Benutzer. Darüber hinaus ist gezeigt, dass eine erste Individualisierungskomponente 20.1 und eine zweite Individualisierungskomponente 20.2 gemäß einem erfindungsgemäßen Verfahren 100 derart angesteuert werden kann, dass jeweilige Signale 200 ausgegeben werden. Es kann sich dann ein erstes Signal 200.1 und ein zweites Signal 200.2 in einem Wirkbereich B beeinflussen, wodurch ein Korrelationssignal 210 entstehen kann. Diese Möglichkeit zur Erzeugung einer Geräteinformation 200 ist rein beispielhaft, sodass bspw. auch andere Individualisierungskomponenten 20 eingesetzt werden können, und ggf. auch anstelle eines Signals 200 eine Information bei den Individualisierungskomponenten durch eine Berechnung und/oder Messung ermittelt werden kann.

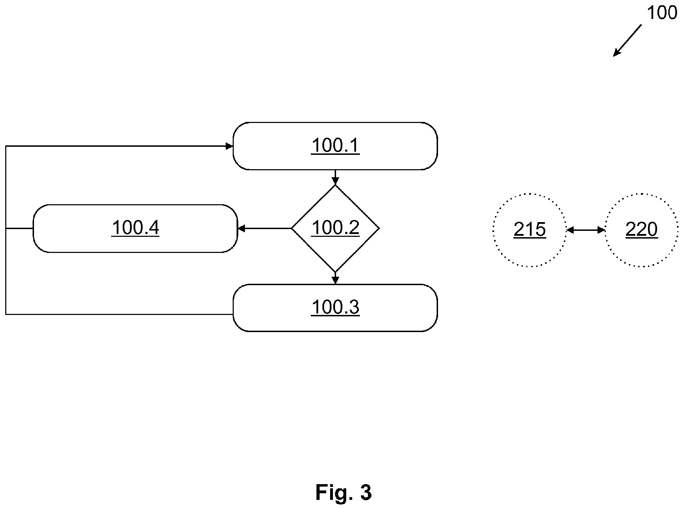

In Figur 3 wird ein Verfahren 100 weiter veranschaulicht. Es ist erkennbar, dass anhand einer Korrelationsvorgabe 220 ein Korrelationsmerkmal 215 bestimmt werden kann, bspw. durch eine Auswertung, wie einen Vergleich des Korrelationssignals 210 mit der Korrelationsvorgabe 220 oder dergleichen. Gemäß einem ersten Verfahrensschritt 100.1 kann dabei wenigstens eine Komponente 20 des tragbaren Geräts 10 als Individualisierungskomponente 20 zur Erzeugung wenigstens einer Geräteinformation 200 über eine gerätefeste Eigenart des tragbaren Geräts 10 angesteuert werden. Gemäß einem zweiten Verfahrensschritt 100.2 kann ein Korrelationssignal 210 erfasst und ausgewertet werden, um ein Auswerteergebnis zu bestimmen. In Abhängigkeit von dem Auswerteergebnis kann dann gemäß einem dritten Verfahrensschritt 100.3 eine Sicherheitsfunktion bei einem Sicherheitssystem 5 aktiviert werden (z. B. bei erfolgreicher Authentifizierung), oder gemäß einem vierten Verfahrensschritt 100.4 die Aktivierung der Sicherheitsfunktion, z. B. bei erfolgloser Authentifizierung, ausbleiben. Die Sicherheitsfunktion ist z. B. eine Ansteuerung des Schließsystems 2 zur Entriegelung des Fahrzeuges 1.

Die voranstehende Erläuterung der Ausführungsformen beschreibt die vorliegende Erfindung ausschließlich im Rahmen von Beispielen.

### Bezuaszeichenliste

- 1: Fahrzeug
- 2: Schließsystem
- 5: Sicherheitssystem
- 10: tragbares Gerät, ID-Geber, Smartphone

- 20: Individualisierungskomponente, Komponente, Erfassungskomponente
- 20.1: erste Individualisierungskomponente, erste Komponente
- 20.2: zweite Individualisierungskomponente, zweite Komponente
- 20.3: Erfassungskomponente, dritte Komponente

- 30: Kommunikationsschnittstelle
- 35: Kommunikationssignal
- 40: Anzeigevorrichtung, Display, Touchscreen

- 100: Verfahren

- 200: Signal, Geräteinformation
- 200.1: erstes Signal, erste Geräteinformation
- 200.2: zweites Signal, zweite Geräteinformation
- 210: Korrelationssignal
- 215: Korrelationsmerkmal
- 220: Korrelationsvorgabe

- 300: externes Gerät, Datenverarbeitungsanlage, Server
- 500: System
- 510: Auswertevorrichtung

- B: Wirkbereich

## Patentansprüche

1. Verfahren (100) zur Aktivierung einer Sicherheitsfunktion bei einem Sicherheitssystem (5) eines Fahrzeuges (1),
**wobei die nachfolgenden Schritte durchgeführt werden:**
a) Ansteuern wenigstens einer Komponente eines tragbaren Geräts (10) als Individualisierungskomponente (20) zur Erzeugung wenigstens einer Geräteinformation (200) über eine gerätefeste Eigenart des tragbaren Geräts (10), wobei ein Lautsprecher des tragbaren Geräts (10) als die Individualisierungskomponente (20.1) angesteuert wird, um gemäß einer vorgespeicherten Vorgabe ein Schallsignal zur Erzeugung der Geräteinformation (200) auszugeben, und zumindest teilweise gleichzeitig ein Vibrationsgeber als wenigstens eine weitere Individualisierungskomponente (20.2) des tragbaren Geräts (10) gemäß der Vorgabe angesteuert wird, um das Schallsignal in definierter Weise zu beeinflussen,
b) Erfassen eines Korrelationssignals (210) durch eine als Gyrosensor oder als Mikrofon ausgeführte Erfassungskomponente, wobei das Korrelationssignal (210) für die wenigstens eine erzeugte Geräteinformation (200) spezifisch ist,
c) Auswerten des erfassten Korrelationssignals (210) zur Bestimmung eines Auswerteergebnisses, um die gerätefeste Eigenart zu identifizieren, wobei ein Unterschied des erfassten Korrelationssignals (210) zur Vorgabe ausgewertet wird, um ein Korrelationsmerkmal (215) zu bestimmen, wodurch die gerätefeste Eigenart identifiziert wird,
d) Aktivieren der Sicherheitsfunktion in Abhängigkeit von dem Auswerteergebnis.

2. Verfahren (100) nach einem der vorhergehenden Ansprüche,
**dadurch gekennzeichnet,**
**dass** gemäß Schritt c) das Auswerten ausschließlich extern und/oder fahrzeugseitig durchgeführt wird, vorzugsweise durch eine externe Datenverarbeitungsanlage (300).

3. Verfahren (100) nach einem der vorhergehenden Ansprüche,
**dadurch gekennzeichnet,**
**dass** bei Schritt c), insbesondere fahrzeugseitig, ein Korrelationsmerkmal (215) des Korrelationssignals (210) bestimmt wird, und bei Schritt d) nur dann ein Aktivieren der Sicherheitsfunktion erfolgt, wenn das Korrelationsmerkmal (215) positiv authentifiziert wird, bevorzugt durch einen Vergleich mit einer jeweiligen Authentifizierungsvorgabe
und/oder dass gemäß Schritt b) das Erfassen und/oder gemäß Schritt c) das Auswerten bereits durch das tragbare Gerät (10) durchgeführt wird, vorzugsweise initiiert durch eine Annäherung an das Fahrzeug (1), und das Korrelationssignal und/oder das Auswerteergebnis zwischengespeichert wird, um es bevorzugt bei Aufforderung durch das Sicherheitssystem (5) an das Sicherheitssystem (5) zu übertragen
und/oder dass bei Schritt c) gemäß einer Gesamtanzahl wenigstens zwei oder wenigstens drei oder wenigstens vier unterschiedliche Korrelationsmerkmale (215) des wenigstens einen Korrelationssignals (210) bestimmt werden, und bei Schritt d) nur dann ein Aktivieren der Sicherheitsfunktion erfolgt, wenn auch nur eine Mindestanzahl der Korrelationsmerkmale (215) positiv authentifiziert wird, bevorzugt durch einen Vergleich mit einer jeweiligen Authentifizierungsvorgabe, wobei besonders bevorzugt die Mindestanzahl 50% oder 70% oder 80% oder 90% der Gesamtanzahl beträgt
und/oder dass bei Schritt d) nur dann ein Aktivieren der Sicherheitsfunktion erfolgt, wenn
- eine Gesamtanzahl der Korrelationsmerkmale (215) positiv authentifiziert wird,
eine Mindestanzahl der Korrelationsmerkmale (215) positiv authentifiziert wird, wobei dann ein Anlernprozess initiiert wird, um die fehlerhaft authentifizierten Korrelationsmerkmale (215) neu am Sicherheitssystem (5) anzulernen.

4. Verfahren (100) nach einem der vorhergehenden Ansprüche,
**dadurch gekennzeichnet,**
**dass** bei erfolgloser Aktivierung gemäß Schritt d) eine Alternativauthentifizierung durchgeführt wird, bevorzugt unabhängig vom tragbaren Gerät (10), besonders bevorzugt anhand eines biometrischen Merkmals eines Benutzers des Fahrzeuges
und/oder dass eine jeweilige Authentifizierungsvorgabe für ein jeweiliges Korrelationsmerkmal (215) durch einen Anlernprozess zur Identifizierung des tragbaren Geräts (10) bestimmt und, und bevorzugt ausschließlich im Fahrzeug (1) gespeichert wird, wobei gemäß Schritt d) bei einer Abweichung wenigstens oder maximal eines der Korrelationsmerkmale von der jeweiligen Authentifizierungsvorgabe eine erneute Identifizierung des tragbaren Geräts (10) angefordert wird, vorzugsweise durch eine Ausgabe eines Hinweises oder einer Fehlermeldung am tragbaren Gerät (10).

5. System (500) zur Aktivierung einer Sicherheitsfunktion bei einem Sicherheitssystem (5) eines Fahrzeuges (1),
- wobei
das System (500) dazu eingerichtet ist ein Verfahren (100) nach einem der vorhergehenden Ansprüche auszuführen.

6. System (500) nach Anspruch 5,
**dadurch gekennzeichnet,**
**dass** das tragbare Gerät (10) als ein tragbares Mobilfunkgerät, insbesondere Smartphone (10), ausgebildet ist, sodass das tragbare Gerät (10) wenigstens eine Kommunikationsschnittelle (30) zur Mobilfunkkommunikation aufweist.

7. Computerprogrammprodukt für ein tragbares Gerät (10) zur Aktivierung einer Sicherheitsfunktion bei einem Sicherheitssystem (5) eines Fahrzeuges (1), wobei das Computerprogrammprodukt Befehle umfasst, die dazu ausgeführt sind, das tragbare Gerät (10) zur Durchführung eines Verfahrens (100) nach einem der Ansprüche 1 bis 4 anzusteuern.

## Claims

1. A method (100) for activating a safety function in a safety system (5) of a vehicle (1), wherein the following steps are performed:
a) activating at least one component of a portable device (10) as an individualization component (20) to generate at least one device information (200) about a device-inherent characteristic of the portable device (10), wherein a loudspeaker of the portable device (10) is activated as the individualization component (20.1) to output an audio signal for generating the device information (200) in accordance with a prestored specification, and, at least partially simultaneously, a vibration generator is activated as at least one further individualization component (20.2) of the portable device (10) in accordance with the specification to influence the audio signal in a defined manner,
b) detecting a correlation signal (210) by a detection component implemented as a gyroscope or a microphone, wherein the correlation signal (210) is specific to the at least one generated device information (200),
c) evaluating the detected correlation signal (210) to determine an evaluation result in order to identify the device-inherent characteristic, wherein a difference between the detected correlation signal (210) and the specification is evaluated to determine a correlation feature (215), thereby identifying the device-inherent characteristic,
d) activating the safety function based on the evaluation result.

2. Method (100) according to one of the preceding claims,
**characterized in that**
in accordance with step c), the evaluation is performed exclusively externally and/or on the vehicle side, preferably by an external data processing system (300).

3. Method (100) according to one of the preceding claims,
**characterized in that**
in step c), in particular on the vehicle side, a correlation feature (215) of the correlation signal (210) is determined, and in step d) the safety function is activated only if the correlation feature (215) is positively authenticated, preferably by comparison with a respective authentication specification
and/or that, in accordance with step b), the detection and/or, in accordance with step c), the evaluation is already performed by the portable device (10), preferably initiated by an approach to the vehicle (1), and the correlation signal and/or the evaluation result is temporarily stored in order to transmit it to the safety system (5), preferably upon request by the safety system (5)
and/or that in step c), a total number of at least two, at least three or at least four different correlation features (215) of the at least one correlation signal (210) are determined, and in step d) the safety function is activated only if at least a minimum number of the correlation features (215) is positively authenticated, preferably by comparison with a respective authentication specification, wherein the minimum number is particularly preferably 50% or 70% or 80% or 90% of the total number
and/or that in step d) the safety function is activated only if a total number of the correlation features (215) is positively authenticated,
a minimum number of the correlation features (215) is positively authenticated, whereupon a training process is initiated to retrain the incorrectly authenticated correlation features (215) at the safety system (5).

4. Method (100) according to one of the preceding claims,
**characterized in that**
in the event of unsuccessful activation according to step d), an alternative authentication is performed, preferably independently of the portable device (10), particularly preferably based on a biometric feature of a user of the vehicle
and/or that a respective authentication specification for a respective correlation feature (215) is determined by a training process for identifying the portable device (10) and is stored preferably exclusively in the vehicle (1), wherein, in accordance with step d), if at least one or at most one of the correlation features deviates from the respective authentication specification, a re-identification of the portable device (10) is requested, preferably by outputting a notification or an error message on the portable device (10).

5. System (500) for activating a safety function in a safety system (5) of a vehicle (1), wherein the system (500) is configured to execute a method (100) according to one of the preceding claims.

6. System (500) according to claim 5,
**characterized in that**
the portable device (10) is configured as a portable mobile communication device, in particular a smartphone (10), such that the portable device (10) comprises at least one communication interface (30) for mobile communication.

7. A computer program product for a portable device (10) for activating a safety function in a safety system (5) of a vehicle (1), wherein the computer program product comprises instructions configured to control the portable device (10) to perform a method (100) according to any one of claims 1 to 4.

## Revendications

1. Procédé (100) d'activation d'une fonction de sécurité dans un système de sécurité (5) d'un véhicule (1),
dans lequel les étapes suivantes sont mises en œuvre :
a) commande d'au moins un composant d'un appareil portable (10) en tant que composant d'individualisation (20) pour générer au moins une information d'appareil (200) concernant une caractéristique propre à l'appareil portable (10), un haut-parleur de l'appareil portable (10) étant commandé en tant que composant d'individualisation (20.1) afin d'émettre, conformément à une consigne préenregistrée, un signal sonore pour générer l'information d'appareil (200), et au moins partiellement simultanément, un générateur de vibrations est commandé en tant qu'au moins un autre composant d'individualisation (20.2) de l'appareil portable (10) conformément à la consigne, afin d'influencer le signal sonore d'une manière définie,
b) détection d'un signal de corrélation (210) par un composant de détection réalisé sous la forme d'un capteur gyroscopique ou d'un microphone, le signal de corrélation (210) étant spécifique à au moins une information d'appareil (200) générée,
c) évaluation du signal de corrélation capté (210) pour déterminer un résultat d'évaluation afin d'identifier la caractéristique propre à l'appareil, une différence entre le signal de corrélation capté (210) et la consigne étant évaluée pour déterminer une caractéristique de corrélation (215), ce qui permet d'identifier la caractéristique propre à l'appareil,
d) activation de la fonction de sécurité en fonction du résultat de l'évaluation.

2. Procédé (100) selon l'une des revendications précédentes,
**caractérisé en ce que**
conformément à l'étape c), l'évaluation est effectuée exclusivement en externe et/ou à bord du véhicule, de préférence par un système de traitement de données externe (300).

3. Procédé (100) selon l'une des revendications précédentes,
**caractérisé en ce que**
à l'étape c), en particulier à bord du véhicule, une caractéristique de corrélation (215) du signal de corrélation (210) est déterminée, et à l'étape d), l'activation de la fonction de sécurité n'a lieu que si la caractéristique de corrélation (215) est authentifiée positivement, de préférence par une comparaison avec une spécification d'authentification respective
et/ou que, conformément à l'étape b), la détection et/ou, conformément à l'étape c), l'évaluation sont déjà effectuées par l'appareil portable (10), de préférence déclenchées par un rapprochement du véhicule (1), et que le signal de corrélation et/ou le résultat de l'évaluation sont mis en mémoire tampon afin d'être transmis au système de sécurité (5), de préférence à la demande de celui-ci
et/ou que, lors de l'étape c), un nombre total d'au moins deux, d'au moins trois ou d'au moins quatre caractéristiques de corrélation (215) différentes du au moins un signal de corrélation (210) sont déterminées, et à l'étape d), l'activation de la fonction de sécurité n'a lieu que si au moins un nombre minimal de caractéristiques de corrélation (215) est authentifié positivement, de préférence par une comparaison avec une spécification d'authentification respective, le nombre minimal s'élevant de préférence à 50 %, 70 %, 80 % ou 90 % du nombre total
et/ou que, lors de l'étape d), l'activation de la fonction de sécurité n'a lieu que si un nombre total de caractéristiques de corrélation (215) est authentifié positivement,
qu'un nombre minimal de caractéristiques de corrélation (215) soit authentifié positivement, auquel cas un processus d'apprentissage est alors lancé afin de réapprendre les caractéristiques de corrélation (215) authentifiées de manière erronée au système de sécurité (5).

4. Procédé (100) selon l'une des revendications précédentes,
**caractérisé en ce que**
en cas d'échec de l'activation selon l'étape d), une authentification alternative est effectuée, de préférence indépendamment de l'appareil portable (10), de manière particulièrement préférée à l'aide d'une caractéristique biométrique d'un utilisateur du véhicule
et/ou **en ce qu'**une spécification d'authentification respective pour une caractéristique de corrélation respective (215) est déterminée par un processus d'apprentissage pour l'identification de l'appareil portable (10) et est mémorisée de préférence exclusivement dans le véhicule (1), une nouvelle identification de l'appareil portable (10) étant demandée, conformément à l'étape d), en cas d'écart d'au moins ou au maximum l'une des caractéristiques de corrélation par rapport à la spécification d'authentification correspondante, de préférence par l'affichage d'une notification ou d'un message d'erreur sur l'appareil portable (10).

5. Système (500) destiné à activer une fonction de sécurité dans un système de sécurité (5) d'un véhicule (1), le système (500) étant conçu pour exécuter un procédé (100) selon l'une des revendications précédentes.

6. Système (500) selon la revendication 5,
**caractérisé en ce que**
l'appareil portable (10) est conçu comme un appareil mobile portable, en particulier un smartphone (10), de sorte que l'appareil portable (10) comporte au moins une interface de communication (30) pour la communication mobile.

7. Produit programme d'ordinateur pour un appareil portable (10) pour l'activation d'une fonction de sécurité dans un système de sécurité (5) d'un véhicule (1), le produit programme d'ordinateur comprenant des instructions conçues pour commander l'appareil portable (10) afin qu'il exécute un procédé (100) selon l'une des revendications 1 à 4.
